(19) Europäisches Patentamt
European Patent Office
Office européen des brevets

(11) **EP 3 073 654 A1**

(12) **EUROPEAN PATENT APPLICATION**

(43) Date of publication:
**28.09.2016 Bulletin 2016/39**

(51) Int Cl.:
**H04B 14/02** (2006.01)   **H04B 1/04** (2006.01)
**H04L 25/49** (2006.01)

(21) Application number: **15305451.5**

(22) Date of filing: **27.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• **Yu, Xin**
**70435 Stuttgart (DE)**

• **Haslach, Christoph**
**70435 Stuttgart (DE)**
• **Markert, Daniel**
**70435 Stuttgart (DE)**
• **Dartois, Luc**
**91620 Nozay (FR)**

(74) Representative: **Kleinbub, Oliver**
**Alcatel-Lucent Deutschland AG**
**Lorenzstr. 10**
**70435 Stuttgart (DE)**

(54) **A METHOD FOR GENERATION OF A PULSE PATTERN USING PULSE WIDTH MODULATION, AND A TRANSMITTER THEREFOR**

(57) The invention concerns a method for generation of a pulse pattern using pulse width modulation, wherein signal distortions are generated by the pulse width modulation, and said signal distortions are compensated by at least one of a group of applying a correction to a baseband signal, and applying a correction after and/or during the pulse width modulation, and a transmitter therefor.

Fig. 5

EP 3 073 654 A1

## Description

### Field of the invention

The invention relates to a method for generation of a pulse pattern using pulse width modulation, and a transmitter adapted to perform said method.

### Background

The existing wireless communication network deployed around the world cannot meet the growing demand for fast and robust wireless data transmission due to ongoing trend of smart-phone. Consequently, the next generation wireless transceiver must employ innovative technologies, such as all-digital transceiver architectures, to effectively pave the wave for future wireless applications.

One of the most promising all-digital transmitter architecture applies so-called delta sigma modulation and pulse width modulation, including pulse position modulation, based transmitter architecture.

However, this kind of transmitter suffers from distortions generated by the pulse width modulation, as described e.g. in the paper with the title "Analysis of distortion in pulse width modulation converters for switching radio frequency power amplifiers" by V. Bassoo, L. Linton, and M. Faulkner, published in IET Microwaves, Antennas and Propagation, 2010, Vol. 4, iss. 12, pp. 2088-2096.

### Summary

There are several state of the art solutions to avoid said distortions generated by the pulse width modulation, which however also have drawbacks:

- Analog RF-PWM solutions provide good performance but do not fit to an all-digital transmitter due to their analogue nature, as e.g. described in the patent application EP11306194.

- An analogue PWM can be emulated in digital by calculating the pulse widths and pulse-positions as they would occur in an analogue PWM. However, this approach is very complex and affords many floating point operations e.g. for filtering and table look-ups at carrier frequency.

- There is the possibility to operate a DSM at a frequency offset which is dimensioned such that the majority of non-wanted so-called intermodulation products fall into regions that are outside the relevant frequencies. Nevertheless there remain some performance degradation and the coding efficiency is reduced.

The object of the invention is thus to propose a flexible and effective method for generation of a pulse pattern for wireless communication using an all-digital transmitter architecture which avoids said above-mentioned distortions generated by the pulse width modulation.

As an example, switch mode power amplifiers (SMPA) are promising approaches for future highly efficient and highly flexible transmitter and amplifier solutions used e.g. in wireless communication networks. A key issue in this context is the switch mode signal generation. An essential part of the SMPA approach is the so-called switch mode modulator (SMM). Due to cost and efficiency reasons it is desirable to have a digital solution for the switch mode modulator (SMM). Thus, in order to support highly efficient switch mode power amplifiers, signals with continuous amplitude, or multi-level signals, need to be converted to 2-level signals. This transformation is e.g. executed by so-called delta sigma modulators (DSM), also called sigma delta modulators and/or so-called pulse width modulators (PWM).

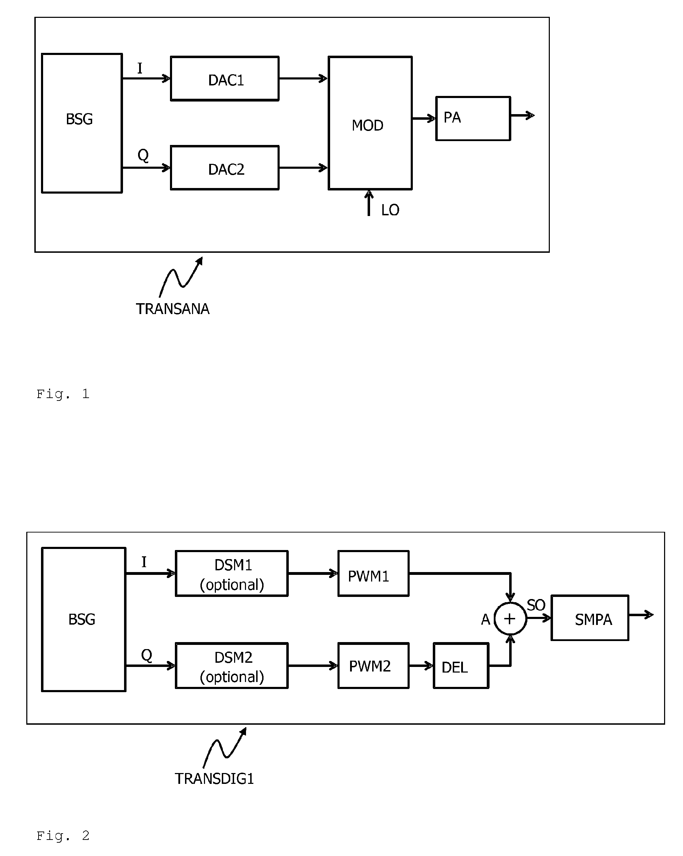

A basic idea of embodiments of the invention is now to construct a digital transmitter according to the principle of a so-called analogue IQ modulation as depicted in fig. 1 and described below.

The object is thus achieved by a method for generation of a pulse pattern using pulse width modulation, wherein

- signal distortions are generated by the pulse width modulation,

- and said signal distortions are compensated by at least one of a group of applying a correction to a baseband signal, and/or applying a correction after and/or during the pulse width modulation.

The object is furthermore achieved by a transmitter for generation of a pulse pattern using pulse width modulation, wherein said transmitter is operable to compensate signal distortions by at least one of a group of applying a correction to a baseband signal, and applying a correction after and/or during the pulse width modulation, said signal distortions being generated by the pulse width modulation.

In an embodiment of the invention, the quadrature component of the baseband signal is pulse width modulated and delayed by 90 degrees with respect to a pulse pattern period at pulse width modulator output.

However, the above-described transmitter according to an embodiment of the invention may suffer from distortions, as a phase shift, i.e. delay, of the quadrature component by 90 degrees applied at PWM pattern frequency may lead to an unwanted image signal and nonlinear distortions if the baseband signal is not symmetrical around frequency 0. More exactly the PWM signal would have certain distortions if the phase of the baseband signal is not constant.

Thus, in an embodiment of the invention, the quadrature component of the baseband signal is pulse width modulated and delayed by 90 degrees with respect to a pulse pattern period at pulse width modulator output plus a delta delay with respect to an instantaneous frequency dependent on a phase shift of successive baseband signals. Thus, the instantaneous frequency is defined as the phase difference between all consecutive samples in baseband. In other words, if for a PWM IQ symbol the quadrature component is shifted by 90 degrees regarding the PWM pulse pattern frequency and the instantaneous frequency taking into account the phase shift between successive baseband IQ signals, then an image and distortion free modulated PWM signal is achieved. A transmitter according to an embodiment of the invention may comprise a baseband signal generator operable to control a delay of 90 degrees of the pulse width modulated quadrature component of the baseband signal with respect to the PWM pulse pattern frequency and an instantaneous frequency dependent on a phase shift of successive baseband signals.

However, it is very difficult to implement a large number of fractional filters and switch between these filters at a high PWM frequency in a digital circuit. It is possible to simplify the delay of the instantaneous frequency to a fixed delay of the instantaneous frequency, in other words, the average value of the instantaneous frequency. In this way, there is no need to switch the filter for each input IQ sample, if the centre frequency of the IQ signal does not change. A more practical method is to use a tunable analogue delay line to perform the delay or part of the delay between the I and Q PWM signal.

Thus, in an embodiment of the invention, the quadrature component of the baseband signal is pulse width modulated and delayed by 90 degrees with respect to a pulse pattern period at pulse width modulator output plus a delta delay with respect to an average of an instantaneous frequency dependent on a phase shift of successive baseband signals. A transmitter according to an embodiment of the invention may comprise a baseband signal generator operable to control a delay of 90 degrees of the pulse width modulated quadrature component of the baseband signal with respect to a pulse pattern period at pulse width modulator output plus a delta delay with respect to an average of an instantaneous frequency dependent on an average of a phase shift of successive baseband signals.

In an embodiment of the invention, a capture of the RF signal in the transmitter chain after the summing point of the pulse width modulated in phase components and the pulse width modulated and delayed quadrature components is performed, a synchronous transposition to baseband or preferably digital intermediate frequency to avoid quadrature defects in the receiver is performed, and then sampling into baseband and spectral comparison and/or time domain comparison between wanted transmitter signal and conjugate of captured image as well as other imperfections to learn the equalizer coefficients by which to inject the antagonist image to the baseband source signal is performed. In doing so, unwanted image signals and other imperfections as described above can be reduced or removed.

Thus, in an embodiment of the invention, a transmitter comprises an image and distorion suppression module operable to receive a part of the pulse pattern converted in the baseband, receive a part of the in phase component and a part of the quadrature component of the baseband signal, perform a comparison in frequency domain and/or time domain of the part of the pulse pattern with a reconstructed baseband signal determined from the part of the in phase component and the part of the quadrature component, and determine based on said comparison equalizer coefficients for application to the baseband signal leading to an at least partial removal of image signals in the pulse pattern.

In an embodiment of the invention, a model is used assuming that an image is coming from a filter whose transfer function corresponds to the difference between the applied fixed constant delay of 90 degrees at used frequency of the pulse width modulation and the exact wanted delay which is 90 degrees for each frequency bin composing the baseband source signal. In order to reduce or remove unwanted image signals, an opposite filter response of the baseband source signal is added to said baseband source signal.

Thus, in an embodiment of the invention, a transmitter comprises an image suppression module operable to determine a filter response leading to an image in the pulse pattern generated by a difference of an applied delay of 90 degrees with respect to a pulse pattern period at a pulse width modulator output and a wanted delay of 90 degrees for each frequency bin composing the baseband signal, and add to the baseband signal in frequency domain an inverse filter response of the baseband signal.

In an embodiment of the invention, said first and second pulse pattern parts are binary pulse patterns.

In an embodiment of the invention, said first and second pulse pattern parts are multi-level pulse patterns.

In an embodiment of the invention, the pulse pattern is fed to a switch mode power amplifier.

In an embodiment of the invention, the in phase component and the quadrature component of the signal are delta sigma modulated and then pulse width modulated.

In an embodiment of the invention, a transmitter may comprise a first switch mode power amplifier for signal amplification using the first pulse pattern part, and may comprise a second switch mode power amplifier for signal amplification using the second pulse pattern part as input signal.

Further features and advantages are stated in the following description of exemplary embodiments, with reference to the figures, which shows significant details, and are defined by the claims. The individual features can be implemented individually by themselves, or several of them can be implemented in any desired combination.

**Brief description of the figures**

In the following the invention will be explained further making reference to the attached drawings.

Fig. 1 schematically shows a transmitter applying analogue IQ modulation according to the state of the art.

Fig. 2 schematically shows a transmitter applying digital IQ pulse width modulation according to an embodiment of the invention.

Fig. 3 shows an output spectrum of a digital IQ pulse width modulation of a baseband signal without frequency offset.

Fig. 4 shows an output spectrum of a digital IQ pulse width modulation of a baseband signal with frequency offset.

Fig. 5 schematically shows a transmitter applying digital IQ pulse width modulation comprising a baseband signal generator for controlling a delay of the pulse width modulated quadrature component according to embodiments of the invention.

Fig. 6 shows a comparison of output spectra of different methods for digital IQ pulse width modulation of a baseband signal with frequency offset according to embodiments of the invention.

Fig. 7 schematically shows a transmitter applying pulse width modulation with image suppression in baseband domain using a feedback loop according to an embodiment of the invention.

Fig. 8 shows a comparison of output spectra of digital IQ pulse width modulation of a baseband signal with frequency offset without image suppression and with image suppression in baseband domain using a feedback loop according to an embodiment of the invention.

Fig. 9 schematically shows a transmitter applying pulse width modulation with image suppression in baseband domain using a filter model according to an embodiment of the invention.

**Description of the embodiments**

Fig. 1 schematically shows a transmitter TRANS applying analogue IQ modulation according to the state of the art.

In a baseband signal generator BSG, in phase components I and quadrature components Q of a baseband signal are generated.

The in phase components I are transmitted to a first digital to analogue converter DAC1, in which the digital in phase components I are converted to analogue in phase components.

The quadrature components Q are transmitted to a second digital to analogue converter DAC2, in which the digital quadrature components Q are converted to analogue quadrature components.

Both the analogue in phase components, and the analogue quadrature components are transmitted to an analogue modulator MOD, in which the analogue in phase components are modulated with a local oscillator signal LO, and the analogue quadrature components are modulated with the 90 degrees phase shifted local oscillator signal LO.

The modulated analogue in phase components and the modulated quadrature components are then added in the modulator MOD, and transmitted to an input of a power amplifier PA.

Since the conventional analogue IQ modulator, i.e. analogue mixer, as applied in the transmitter depicted in fig. 1 does not suffer from any imperfection, a basic idea of embodiments of the inventions is to construct a digital transmitter according to the principle of the analogue IQ modulation.

Fig. 2 schematically shows such a digtal transmitter TRANSDIG1 applying digital IQ pulse width modulation according to an embodiment of the invention.

In a baseband signal generator BSG, in phase components I and quadrature components Q of a baseband signal are generated.

The in phase components I are transmitted to a first delta sigma modulator DSM1, in which the digital in phase components I are transformed into an index of a predefined pulse pattern.

The index is fed to an input of a first pulse width modulator PWM1, and a binary or multi-level first pulse pattern part is generated. For each output value candidate of the first delta sigma modulator DSM1, i.e. for each candidate value for the index one first pulse pattern part of a certain length is generated.

The first pulse pattern part is then fed to a first input of an adder A, or in an alternative of the embodiment to an analogue combiner.

The quadrature components Q are transmitted to a second delta sigma modulator DSM2, in which the digital quadrature components Q are transformed into an index of a predefined pulse pattern.

The index is fed to an input of a second pulse width modulator PWM2, and a binary or multi-level second pulse pattern part is generated. For each output value candidate of the second delta sigma modulator DSM2, i.e. for each candidate value for the index one second pulse pattern part of a certain length is generated.

The second pulse pattern part is then fed to an input of a delay module DEL, as e.g. a phase shifter, in which the second pulse pattern part is phase shifted by 90 degrees resulting in a phase shifted second pulse pattern part. Thus, the delay module DEL in the Q branch introduces a 90 degree phase shift regarding to a PWM pattern period, which replaces the multiplication of I and Q branch with sinusoid and cosine signal respectively as performed by the transmitter TRANS applying analogue IQ modulation as depicted in fig. 1 and described above. For example, assumed that the first and second pulse width modulator PWM1 and PWM2 have a resolution of 16 bits, i.e. 16 bits per PWM pattern period, which means a period of carrier frequency contains 16 digital bits, i.e. a period of carrier frequency is split into 16 time segments. In this case, a delay of 90 degrees indicates a delay of 4 bits in the Q branch.

The phase shifted second pulse pattern part is then fed to a second input of the adder A.

The first pulse pattern part and the phase shifted second pulse pattern part are added in the adder A resulting in a wanted pulse pattern SO as output of the adder A. After combining the first pulse pattern part and the phase shifted second pulse pattern part, the signal alphabet may increase from {0,1}, i.e. binary, to {0,1,2}, i.e. duobinary or ternary. But the probability of 2 is extremely low. Therefore, one is able to use a hard limiter after the adder A to restrict the combined signal back to {0,1}, i.e. binary, with negligible performance loss.

The pulse pattern SO is transmitted as input signal to a switch mode power amplifier SMPA.

Such a signal amplification can e.g. be used in a wireless communication network for amplification of radio signals for transmission over an air interface.

In a further embodiment of the invention, instead of amplifying the pulse pattern SO in the switch mode power amplifier SMPA, the first pulse pattern part and phase shifted second pulse pattern part can be used as input signals of two separate switch mode amplifiers, and the amplified first pulse pattern part and the amplified phase shifted second pulse pattern part are added in an adder resulting in an amplified pulse pattern as output of the adder and of the transmitter.

In a yet further embodiment, the first and second delta sigma modulators DSM1 and DSM2 are omitted, and the in phase components I and quadrature components Q of the baseband signal are directly transmitted to the first and second pulse width modulators PWM1 and PWM2 respectively.

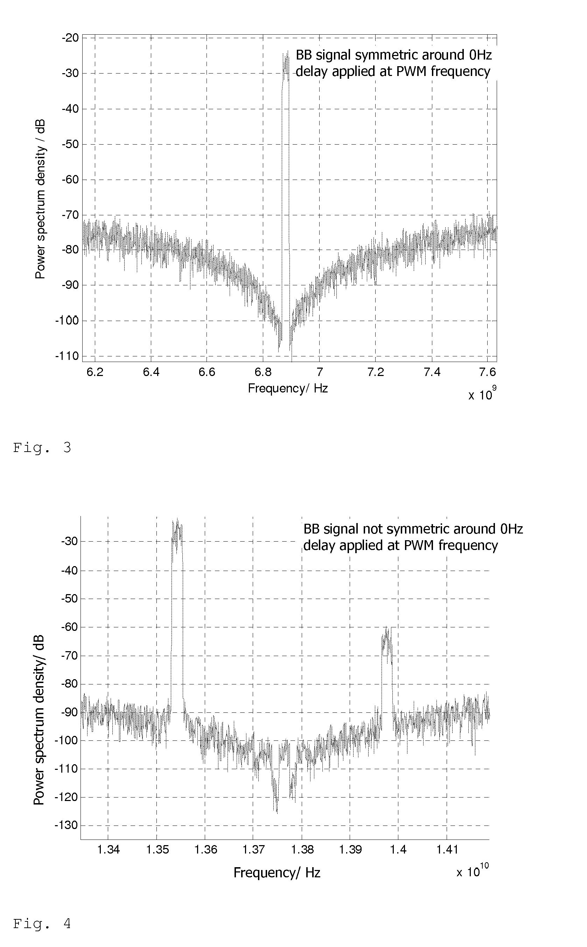

Fig. 3 shows an output spectrum of a digital IQ pulse width modulation of a baseband signal without frequency offset.

In Fig. 3 a simulated power spectrum density of an LTE signal converted by the proposed digital IQ pulse width modulation with delta sigma modulation as depicted in fig. 2 and described above is shown in frequency domain. The in phase component and the quadrature component of the input baseband signal are independently modulated e.g. by so-called ternary pulse width modulators, which provide negative pulses which are 180 degrees delayed to positive pulses referring to PWM frequency, i.e. the frequency how often the e.g. 16bit pattern of a period of carrier frequency is generated. Such a ternary pulse width modulator is e.g. described in the European patent application EP12305599 A1.

For simulation of the output spectrum of the transmitter TRANSDIG1 depicted in fig. 3, it has been assumed, that the baseband signal stands symmetrically around frequency zero, in other words, the baseband signal has no frequency offset to PWM frequency referring to the RF signal. The output spectrum shows no imperfections as e.g. unwanted image signals.

Fig. 4 shows an output spectrum of a digital IQ pulse width modulation of a baseband signal with frequency offset.

In Fig. 4 a simulated power spectrum density of an LTE signal converted by the proposed digital IQ pulse width modulation with delta sigma modulation as depicted in fig. 2 and described above is shown in frequency domain. In contrast to the simulation of the output spectrum depicted in fig. 3, the baseband signal does not stand symmetrically around frequency zero, in other words, the baseband signal has a certain frequency offset to PWM frequency referring to the RF signal. Thus, an image signal between 13.9 and 14.0 GHz is observed at the output of the transmitter TRANSDIG1, as shown in Fig. 4 due to the frequency offset of the baseband signal. This image signal is not wanted and can be considered as a distortion.

According to an embodiment of the invention, in order to suppress the image signal, the quadrature component of the baseband signal is delayed by 90 degrees referring to the sum of the PWM frequency and instantaneous frequency of the baseband signal instead of the PWM frequency. In this way one needs only to calculate the phase shift between successive input baseband IQ signals, with the nth sample of the instantanous frequency being calculated by

$$ph_{inst}(n) = phase(x(n)) - phase(x(n-1));$$

with x(n) indicating the input baseband IQ signals at PWM sampling rate and the instantaneous phase shift can be positive or negative. The instantaneous frequency can be represented by:

$$f_{inst}(n) = \frac{ph_{inst}(n)}{360\,deg} \cdot f_s;$$

where fs indicates the sampling frequency of the PWM input signal. And the total delay, i.e. phase shift between the I and Q signal can be given by:

$$Total\_ph_{inst}(n) = \mod(90\,deg + ph_{inst}(n),\ 360\,deg);$$

where mod() indicates a modulo operation of 360 degree.

If for each PWM IQ symbol the quadrature component is shifted by 90 degrees regarding the exact frequency of the RF signal, one can get an image free modulated PWM signal.

However, it is very difficult to implement a large number of fractional filters and switch between said filters at a high PWM frequency in a digital circuit. Thus, according to a further embodiment of the invention, the delay of the instantaneous frequency of the RF signal is simplified to a fixed delay of the instantaneous frequency. In other words, the delay of the instantaneous frequency of the RF signal is simplified to an average value of the delay of the instantaneous frequency, which can be calculated as:

$$ph_{inst}\_average = \frac{1}{M-1}\sum_{n=2}^{M} phase(x(n)) - phase(x(n-1));$$

$$Total\_ph_{inst}\_average = 90\,deg + ph_{inst}(n)\_average;$$

In this way, the filters must not be switched for each input IQ sample, if the carrier frequency of the IQ signal does not change. Furthermore, the delay and signal combining can be partly or entirely realized by analogue components by using a tunable delay component and an analogue combiner. For example the 90 deg can be done in digital domain using a field programmable gate array (FPGA). The rest could be realized by a preferably tunable delay line.

In the following, a transmitter applying digital IQ pulse width modulation which suppresses the above-mentioned image signal is described.

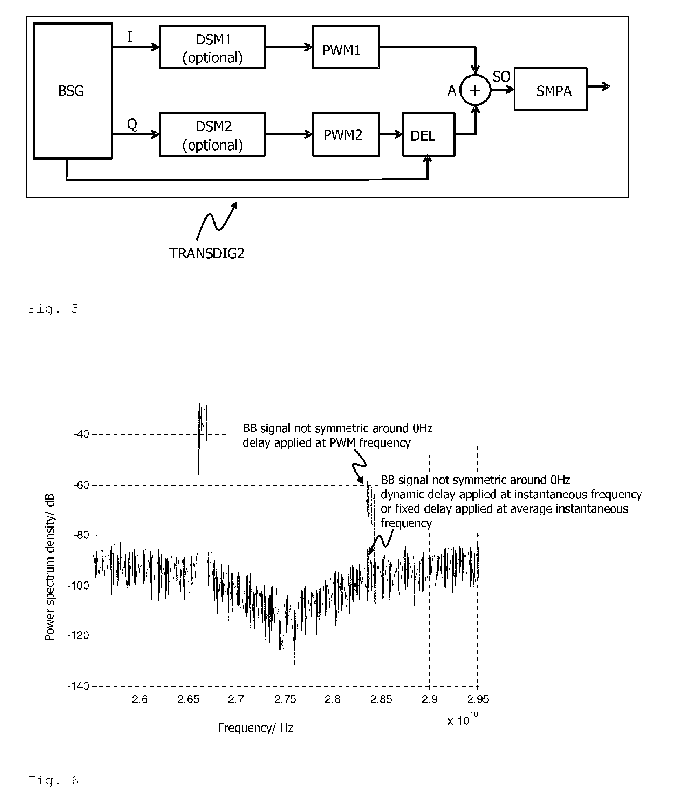

Fig. 5 schematically shows a transmitter TRANSDIG2 applying digital IQ pulse width modulation comprising a baseband signal generator for controlling a delay of the pulse width modulated quadrature component according to embodiments of the invention.

As the embodiment in fig. 5 in principle corresponds to the embodiment depicted in fig. 2, only the differences are described in the following.

In addition to the transmitter TRANSDIG1 depicted in fig. 2, the transmitter TRANSDIG2 depicted in fig. 5 comprises a connection between the baseband signal generator BSG and the delay module DEL.

In an embodiment of the invention, the baseband signal generator BSG controls a delay of 90 degrees of the pulse width modulated quadrature component Q of the baseband signal with respect to a sum of a PWM frequency and an instantaneous frequency dependent on a phase shift of successive baseband signals as described above.

In a further embodiment of the invention, the baseband signal generator BSG controls a delay of 90 degrees of the pulse width modulated quadrature component Q of the baseband signal with respect to a sum of a PWM frequency and an average of an instantaneous frequency dependent on an average of a phase shift of successive baseband signals as described above.

In the following, the performance improvement due to controlling a delay of 90 degrees of the pulse width modulated quadrature component Q of the baseband signal with respect to an instantaneous frequency of the second pulse pattern part either dependent on a phase shift of successive baseband signals, or dependent on an average of a phase shift of successive baseband signals is described.

Fig. 6 shows a comparison of output spectra of different methods for digital IQ pulse width modulation of a baseband signal with frequency offset according to embodiments of the invention.

As a first output spectrum, similar to the output spectrum depicted in fig. 4, a simulated power spectrum density of an LTE signal converted by the proposed digital IQ pulse width modulation with delta sigma modulation as depicted in fig. 2 and described above is shown in frequency domain. The baseband signal does not stand symmetrically around frequency zero, in other words, the baseband signal has a certain frequency offset to PWM frequency referring to the RF signal. Thus, an image signal between 28.0 and 28.5 GHz is observed at the output of the transmitter TRANSDIG1 due to the frequency offset of the baseband signal. This image signal is not wanted and can be considered as a distortion.

As a second output spectrum, a simulated power spectrum density of an LTE signal converted by the proposed digital IQ pulse width modulation with delta sigma modulation as depicted in fig. 5 and described above is shown in frequency domain. The baseband signal does not stand symmetrically around frequency zero. For the simulation, a delay of 90 degrees of the pulse width modulated quadrature component Q of the baseband signal with respect to a sum of a PWM frequency and an instantaneous frequency is controlled dependent on a phase shift of successive baseband signals.

As a third output spectrum, a simulated power spectrum density of an LTE signal converted by the proposed digital IQ pulse width modulation with delta sigma modulation as depicted in fig. 5 and described above is shown in frequency domain. The baseband signal does not stand symmetrically around frequency zero. For the simulation, a delay of 90 degrees of the pulse width modulated quadrature component Q of the baseband signal with respect to a sum of PWM frequency and an instantaneous frequency is controlled dependent on an average of a phase shift of successive baseband signals.

The second output spectrum with a delay regarding the instantaneous frequency provides the best performance, and the image signal disappears completely under the noise.

The third output spectrum with a constant delay referring to a carrier frequency is slightly worse than the second output spectrum, but still has a suppression of the image signal over 30dB.

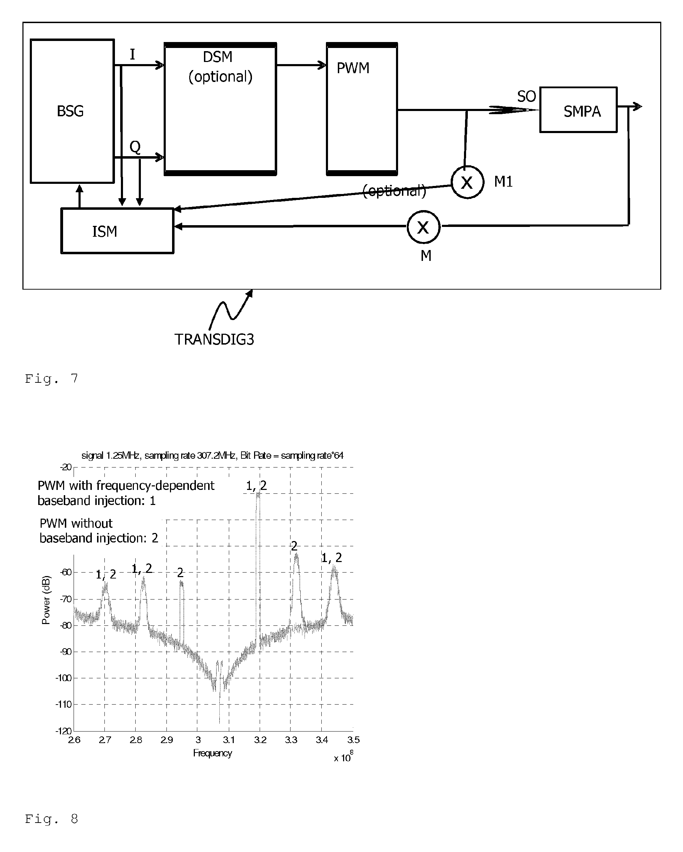

Fig. 7 schematically shows a transmitter applying pulse width modulation with image suppression in baseband domain using a feedback loop according to an embodiment of the invention.

In a baseband signal generator BSG, in phase components I and quadrature components Q of a baseband signal are generated.

Both, the in phase components I and the quadrature components Q are transmitted to a delta sigma modulator DSM, in which the in phase components I and the quadrature components Q are transformed into an index of a predefined pulse pattern.

The index is fed to an input of a pulse width modulator PWM, and a binary or multi-level first pulse pattern part is generated. For each output value candidate of the delta sigma modulator DSM, i.e. for each candidate value for the index one pulse pattern SO of a certain length is generated.

The pulse pattern SO is transmitted as input signal to a switch mode power amplifier SMPA.

In addition to the transmitter TRANSDIG1 depicted in fig. 2, the transmitter TRANSDIG3 depicted in fig. 7 comprises an image suppression module ISM and a mixer M.

An output of the switch mode power amplifier SMPA is connected to an input of the image suppression module ISM via the mixer M. Optionally, one can also couple the SMPA input signal to the image and distortions suppression module ISM via the mixer M1. A first output of the baseband signal generator BSG providing in phase components is connected to a second input of the image suppression module ISM, and a second output of the baseband signal generator BSG providing quadrature components is connected to a third input of the image suppression module ISM. An output of the image suppression module ISM is connected to an input of the baseband signal generator BSG.

The transmitter TRANSDIG3 depicted in fig. 7 for pulse width modulation with image suppression in baseband domain uses the fact that the artifact created by a constant quarter RF period time shift for generation of quadrature components is mathematically just a pink, frequency dependent image of the wanted input baseband signal. In other words, each image spectral component has a fixed and stationary complex attenuation from corresponding image tone in source baseband signal so that this defect can be corrected by so called adaptive image suppressor even without knowing the image model, but by learning it and injecting it in phase opposite to the baseband source.

According to the embodiment, a capture of the amplified pulse pattern SO is synchronously transposed in the mixer M to baseband domain, or to digital intermediate frequency to avoid quadrature defects in the receiver. Then sampling into baseband and doing spectral comparison or/and time domain comparison between the wanted transmission signal and the received signal is performed in the image suppression module ISM to learn the equalizer coefficients which must be used to inject the antagonist image to the baseband source signal in order to remove or reduce the unwanted image. In other words, said comparison is performed repeatedly with adapted equalizer coefficients with the aim of reduced or removed images. In an alternative of the embodiment, a capture of the pulse pattern SO before amplification in the switch mode power amplifier SMPA is synchronously transposed in the mixer M.

Thus, the image suppression module ISM receives a part of the pulse pattern SO in the baseband, receives a part of the in phase component I and a part of the quadrature component Q of the baseband signal, performs a comparison in frequency domain and/or time domain of the part of the pulse pattern SO with a reconstructed baseband signal determined from the part of the in phase component I and the part of the quadrature component Q, and determines based on said comparison equalizer coefficients for application to the baseband signal leading to an at least partial removal of image signals in the pulse pattern SO.

An advantage of the embodiment is, that it is very robust and can achieve by correlation a residue of image in the -70dBc as correlation can by integration get rid of the delta sigma modulation random noise especially at higher frequencies.

Moreover there is no limit in the frequency dependent correction accuracy, as this is just a matter of granularity in the correlation and integration time, or if performed in frequency domain it is defined by the fast fourier transformation (FFT) definition which is linked to the size of the captured signal vector.

Due to the stationary nature of the defect, the correction learning must be performed only one time.

Furthermore, said injection method can be applied for other types of pulse width modulation as well. The general formula for the baseband injection signal $sig\_inj\_fil$ is given by:

$$sig\_inj\_fil = \underbrace{\sum_{v=1}^{V}\sum_{k=0}^{N}\sum_{p=0}^{P} a_{img\_v\_p\_k} * f_{v\_p}\left(conj\left(sig\left(n-k\right)\right)\right)}_{\text{image distortion injection}} + \underbrace{\sum_{u=2}^{U}\sum_{k=0}^{N}\sum_{p=0}^{P} a_{u\_p\_k} * f_{u\_p}\left(sig\left(n-k\right)\right)}_{\text{distortion injection}}$$

where sig(n) represents the input baseband signal and fv_p() indicates the basis functions, which are used to compensate the nonlinearities caused by the PWM. U,N,P represent the order of nonlinear images of the pulse width modulation, finite impulse response (FIR) filter orders, and orders of basis functions, respectively. Since the imperfections of pulse width modulation are stationary, it is possible to calculate these coefficients a with any test sequence or during real operating time. And the source including baseband injection signal can be given by:

$$sig\_bb = sig + sig\_inj\_fil;$$

Fig. 8 shows a comparison of output spectra of pulse width modulation of a baseband signal with frequency offset without image suppression and with image suppression in baseband domain using a feedback loop according to an embodiment of the invention depicted in fig. 7.

For the simulation of the output spectra, an LTE signal of 1.25 MHZ, a sampling rate of 307.2 MHz, and a PWM pattern has a resolution of 64 bits.

As a first output spectrum, a simulated power spectrum density of an LTE signal converted by the proposed digital IQ pulse width modulation with delta sigma modulation with image suppression in baseband domain using a feedback loop as depicted in fig. 7 and described above is shown in frequency domain. The signal peaks are indicated with 1 in fig. 8.

As a second output spectrum, a simulated power spectrum density of an LTE signal converted by the proposed pulse width modulation with delta sigma modulation and the baseband injection method described above is shown in frequency domain. The signal peaks are indicated with 2 in fig. 8.

The baseband signal does not stand symmetrically around frequency zero, in other words, the baseband signal has a certain frequency offset to PWM frequency referring to the RF signal. Thus, image signals are observed in both output spectra at the output of the transmitter TRANSDIG1 and the transmitter TRANSDIG3 respectively due to the frequency offset of the baseband signal. These image signals are not wanted and can be considered as a distortion.

Instead of eliminating all distortion in the PWM signal, one needs only to make certain frequency range around the wanted signal free of any distortion. In simulation, the 1st image and 3rd nonlinearities have been selectively compensated. The simulation results show that exactly the 1st image and 3rd order nonlinearities in the first output spectrum are completely suppressed due to the image suppression in baseband domain using a feedback loop as depicted in fig. 7 and described above. Generally, one is able to arbitrarily compensate any and any combination of the image and distortions by using the baseband injection method.

**EP 3 073 654 A1**

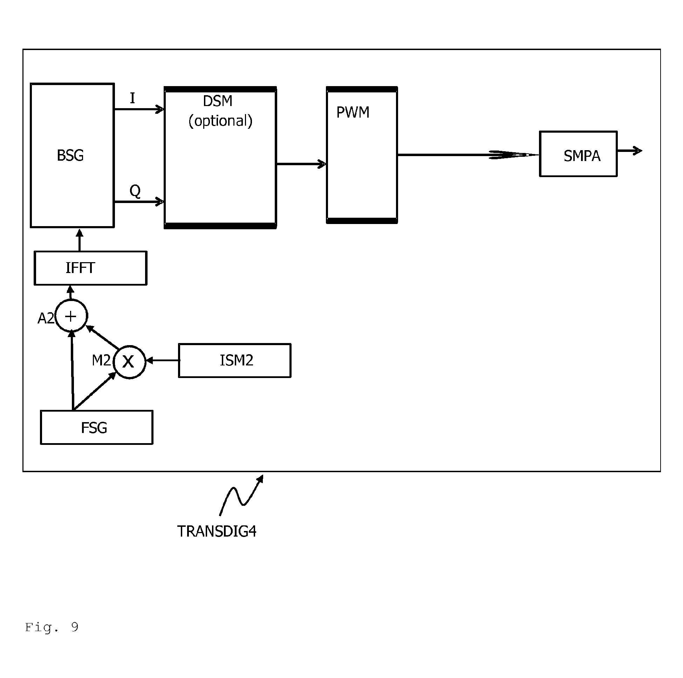

Fig. 9 schematically shows a transmitter applying pulse width modulation with image suppression in baseband domain using an infinite impulse response filter model according to an embodiment of the invention.

In a baseband signal generator BSG, in phase components I and quadrature components Q of a baseband signal are generated.

Both, the in phase components I and the quadrature components Q are transmitted to a delta sigma modulator DSM, in which the in phase components I and the quadrature components Q are transformed into an index of a predefined pulse pattern.

The index is fed to an input of a pulse width modulator PWM, and a binary or multi-level first pulse pattern part is generated. For each output value candidate of the delta sigma modulator DSM, i.e. for each candidate value for the index one pulse pattern SO of a certain length is generated.

The pulse pattern SO is transmitted as input signal to a switch mode power amplifier SMPA.

In addition to the transmitter TRANSDIG1 depicted in fig. 2, the transmitter TRANSDIG4 depicted in fig. 9 comprises an image suppression module ISM2, a frequency domain baseband signal generator FSG, a mixer M2, a second adder A2, and an inverse fast fourier transformation module IFFT.

An output of the frequency domain baseband signal generator

FSG is connected both to an input of the second adder A2, and to an input of the mixer M2. An output of the image suppression module ISM2 is connected to a second input of the mixer M2. An output of the mixer M2 is connected to a second input of the second adder A2. An output of the second adder A2 is connected to an input of the inverse fast fourier transformation module IFFT, and an output of the inverse fast fourier transformation module IFFT is connected to an input of the baseband signal generator BSG.

The transmitter TRANSDIG4 depicted in fig. 9 for pulse width modulation with image suppression in baseband domain uses a mathematical defect model corresponding to an image coming from a digital filter that corresponds to the difference between the fixed constant 90 degrees delay at used pulse width modulation frequency and the exact wanted delay which is 90 degrees for each frequency bin composing the baseband source signal. This digital filter with complex coefficients has a high pass type of spectral response with a notch at carrier center frequency. Either in generic case of any random source baseband signal one can add to the source baseband signal an opposite filter response of the source baseband signal with a simplified/cut version of the infinite impulse response (IIR) in the form of a finite impulse response (FIR), or more elegantly e.g. in case of an orthogonal frequency division multiplexing (OFDM) based signal one can simply apply in the frequency domain, i.e. before IFFT, an injection added to the source baseband signal and which is made out of the source image simply weighted by the coefficients of the complex FFT of the here above-described digital filter modeling the defect, just making the convolution in the frequency domain for symbol based type of standards as e.g. WIFI or LTE. In doing so, the unwanted image signals are reduced or removed. The applied filter is the exact model of the inverse response of the defect caused in the subsequent PWM for the concerned transmitted baseband signal full bandwidth.

Thus, according to the embodiment, the image suppression module ISM2 determines a filter response leading to an image in the pulse pattern SO generated by a difference of the wanted exact 90 degrees shift for each instant frequency bin and the PWM realized constant delay whatever the instant frequency, the later being image free only at center of the spectrum. Then, in the mixer M2, the baseband signal in frequency domain coming from the frequency domain baseband signal generator FSG is mixed with the inverse filter response and sent to the second adder A2. In the second adder A2, the baseband signal in frequency domain mixed with the inverse filter response is added with the baseband signal in frequency domain coming from the frequency domain baseband signal generator FSG, and the result is sent to the inverse fast Fourier transformation module IFFT, in which the baseband signal is transformed in time domain by inverse fast Fourier transformation, and sent to the baseband signal generator BSG for provision of the baseband signal in time domain.

The biggest advantage of this embodiment is the pure digital fully exact cancellation at the spectral definition/granularity of the source baseband signal requiring just one complex multiplier for each source frequency bin. So the averaging defect of constant central frequency correction or residual TX noise error in adaptive quadrature correction methods is avoided in this embodiment. Furthermore, the method works fine for any spectral complexity of the source baseband signal, even for asymmetric multicarrier disaggregated signals. Moreover for wideband source signals the images can cause up to -25 or - 30dBc errors and corresponding error vector magnitude (EVM) that need to be corrected, and exact mathematical source correction is an advantage to get to true zero EVM whatever the added DSM noise shaping error.

As an example for an application of a transmitter according to the invention, a base station in a wireless communication network can comprise a transmitter according to one of the embodiments described above, and an antenna network for transmission of signals over an air interface.

**Claims**

1. A method for generation of a pulse pattern (SO) using pulse width modulation, wherein

   • signal distortions are generated by the pulse width modulation,
   • and said signal distortions are compensated by at least one of a group of applying a correction to a baseband signal, and applying a correction after and/or during the pulse width modulation.

2. A method according to claim 1, wherein a quadrature component (Q) or an in phase component (I) of the baseband signal is pulse width modulated and delayed by 90 degrees with respect to a pulse pattern period at a pulse width modulator output.

3. A method according to claim 1, wherein a quadrature component (Q) or an in phase component (I) of the baseband signal is pulse width modulated and delayed by 90 degrees with respect to a pulse pattern period at a pulse width modulator output plus a delta delay with respect to an instantaneous frequency dependent on a phase shift of successive baseband signals.

4. A method according to claim 1, wherein a quadrature component (Q) or an in phase component (I) of the baseband signal is pulse width modulated and delayed by 90 degrees with respect to a pulse pattern period at a pulse width modulator output plus an average delta delay with respect to an instantaneous frequency dependent on an average of a phase shift of successive baseband signals.

5. A method according to any of the preceding claims, wherein an in phase component (I) and a quadrature component (Q) of the baseband signal are delta sigma modulated and then pulse width modulated resulting in first and second pulse pattern parts respectively.

6. A method according to any of the preceding claims, wherein said first and second pulse pattern parts are binary or multi-level pulse patterns.

7. 7. A transmitter (TRANSDIG1, TRANSDIG2) for generation of a pulse pattern (SO) using pulse width modulation, wherein said transmitter (TRANSDIG1, TRANSDIG2) is operable to compensate signal distortions by at least one of a group of applying a correction to a baseband signal, and applying a correction after and/or during the pulse width modulation, said signal distortions being generated by the pulse width modulation.

8. A transmitter (TRANSDIG1, TRANSDIG2) according to claim 7, wherein said transmitter (TRANSDIG1, TRANSDIG2) is operable to pulse width modulate and delay a quadrature component (Q) or an in phase component (I) of the baseband signal by 90 degrees with respect to a pulse pattern period at a pulse width modulator output.

9. A transmitter (TRANSDIG2) according to claim 7, comprising a baseband signal generator operable to control a delay of 90 degrees of a pulse width modulated quadrature component (Q) or in phase component (I) of the baseband signal with respect to a pulse pattern period at a pulse width modulator output plus a delta delay with respect to an instantaneous frequency dependent on a phase shift of successive baseband signals.

10. A transmitter (TRANSDIG2) according to claim 7, comprising a baseband signal generator operable to control a delay of 90 degrees of a pulse width modulated quadrature component (Q) or in phase component (I) of the baseband signal with respect to a pulse pattern period at a pulse width modulator output plus an average delta delay with respect to an instantaneous frequency dependent on an average of a phase shift of successive baseband signals.

11. A transmitter (TRANSDIG3) according to claim 7, comprising an image suppression module (ISM) operable to

   • receive a part of the pulse pattern (SO) in the baseband,
   • receive a part of an in phase component (I) and a part of a quadrature component (Q) of the baseband signal,
   • perform a comparison of the part of the pulse pattern (SO) with a reconstructed baseband signal determined from the part of the in phase component (I) and the part of the quadrature component (Q),
   • and determine based on said comparison equalizer coefficients for application to the baseband signal leading to an at least partial removal of image signals in the pulse pattern (SO).

12. A transmitter (TRANSDIG4) according to claim 7, comprising an image suppression module (ISM2) operable to

• determine a filter response leading to an image in the pulse pattern (SO) generated by a difference of an applied delay of 90 degrees with respect to a pulse pattern period at a pulse width modulator output and a wanted delay of 90 degrees for each frequency bin composing the baseband signal,
• and add to the baseband signal in frequency domain an inverse filter response of the baseband signal.

13. A transmitter (TRANSDIG1, TRANSDIG2, TRANSDIG3, TRANSDIG4) according to any of the claims 7 to 12, comprising a switch mode power amplifier (SMPA) for signal amplification using the pulse pattern (SO) as input signal.

14. A transmitter (TRANSDIG1, TRANSDIG2) according to any of the claims 7 to 12, comprising a first switch mode power amplifier for signal amplification using a first pulse pattern part, and comprising a second switch mode power amplifier for signal amplification using a second pulse pattern part as input signal.

15. A base station comprising a transmitter (TRANSDIG1, TRANSDIG2, TRANSDIG3, TRANSDIG4) according to any of the claims 7 to 14 and at least one antenna network for transmission of signals over an air interface.

Fig. 1

TRANSANA

Fig. 2

TRANSDIG1

Fig. 3

Fig. 4

TRANSDIG2

Fig. 5

Fig. 6

TRANSDIG3

Fig. 7

signal 1.25MHz, sampling rate 307.2MHz, Bit Rate = sampling rate*64

PWM with frequency-dependent
baseband injection: 1

PWM without
baseband injection: 2

Fig. 8

Fig. 9

Europäisches
Patentamt

European
Patent Office

Office européen
des brevets

# EUROPEAN SEARCH REPORT

Application Number

EP 15 30 5451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/076021 A1 (ERICSSON TELEFON AB L M [SE]; MALMQVIST HAAKAN [SE]) 26 June 2008 (2008-06-26) * page 1, line 11 - page 2, line 14 * * page 3, line 30 - line 36 * * page 12, line 25 - page 15, line 22 * * page 21, line 9 - line 26 * * page 24, line 21 - page 25, line 5 * * figures 5-20 * | 1-4,7-15 | INV. H04B14/02 H04B1/04 H04L25/49 |
| X | US 2008/197935 A1 (NUIJTEN PETRUS ANTONIUS CORNEL [NL] ET AL) 21 August 2008 (2008-08-21) * paragraph [0003] - paragraph [0006] * * paragraph [0010] * * paragraph [0028] * * figure 3 * | 1,5-7 | |

TECHNICAL FIELDS
SEARCHED      (IPC)

H04B
H04L

The present search report has been drawn up for all claims

| Place of search | Date of completion of the search | Examiner |
|---|---|---|
| The Hague | 28 September 2015 | Amadei, Davide |

EPO FORM 1503 03.82 (P04C01)

**ANNEX TO THE EUROPEAN SEARCH REPORT
ON EUROPEAN PATENT APPLICATION NO.**

EP 15 30 5451

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2015

| Patent document cited in search report | | | Publication date | Patent family member(s) | | | Publication date |
|---|---|---|---|---|---|---|---|
| WO 2008076021 | A1 | | 26-06-2008 | CN | 101641931 | A | 03-02-2010 |
| | | | | EP | 2092709 | A1 | 26-08-2009 |
| | | | | US | 2010014575 | A1 | 21-01-2010 |
| | | | | WO | 2008076021 | A1 | 26-06-2008 |
| US 2008197935 | A1 | | 21-08-2008 | AT | 520205 | T | 15-08-2011 |
| | | | | CN | 101057406 | A | 17-10-2007 |
| | | | | EP | 1792401 | A2 | 06-06-2007 |
| | | | | JP | 2008523648 | A | 03-07-2008 |
| | | | | KR | 20070065375 | A | 22-06-2007 |
| | | | | US | 2008197935 | A1 | 21-08-2008 |
| | | | | WO | 2006030363 | A2 | 23-03-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 11306194 A

- EP 12305599 A1

**Non-patent literature cited in the description**

- **V. BASSOO ; L. LINTON ; M. FAULKNER.** Analysis of distortion in pulse width modulation converters for switching radio frequency power amplifiers. *IET Microwaves, Antennas and Propagation,* 2010, vol. 4 (12), 2088-2096